# EUROPÄISCHE PATENTSCHRIFT

(11) **EP 3 062 113 B1**
(45) Veröffentlichungstag und Bekanntmachung des Hinweises auf die Patenterteilung: **21.08.2019**
(21) Anmeldenummer: 15192971.8
(22) Anmeldetag: 04.11.2015
(51) Int. Cl.: G01P 3/487, G01P 3/488, B65B 57/02, G01N 21/90, B65G 47/244, B65C 9/04

(54) **ROTATIONSÜBERWACHUNG**
ROTATION MONITORING
SURVEILLANCE DE ROTATION

(30) Priorität: 25.02.2015 DE 202015001463 U
(43) Veröffentlichungstag der Anmeldung: 31.08.2016
(73) Patentinhaber: Seidenader Maschinenbau GmbH, 85570 Markt Schwaben (DE)
(72) Erfinder: SCHINDLER, Dr. Hans-Georg, 83607 Holzkirchen (DE); FEDERSEL, Dipl.-Ing. Till, 81541 München (DE)
(74) Vertreter: Laufhütte, Dieter

(56) Entgegenhaltungen:
- DE-A1-102009 014 663
- DE-A1-102013 206 989
- DE-T2- 60 203 769
- JP-A- 2009 156 607
- JP-U- H0 569 611

## Beschreibung

Die vorliegende Erfindung betrifft eine Vorrichtung zur Rotationsüberwachung sowie eine Inspektionsmaschine, die eine solche Vorrichtung umfasst.

Inspektionsmaschinen oder auch Inspektionskarusselle dienen zur Inspektion von Prüflingen, insbesondere von Behältern für flüssige und trockene Produkte. Dabei werden die Prüflinge bzw. Behälter, wie Ampullen, Karpulen (=Zylinderampullen) oder Injektionsfläschchen, auch Vials genannt, mit Hilfe eines für jeden Behälter separaten Servoantriebs rotiert. Der für jeden Behälter, der einer Inspektion unterzogen werden soll, vorhandene Servoantrieb dient dazu, den Behälter in einer bestimmten Weise auszurichten und/oder diesen mit einer bestimmten Drehzahl zu rotieren. Insbesondere bei Inspektionsverfahren wie der Partikelinspektion ist ein Rotieren des Behälters um seine eigene Achse notwendig, um einen Rückschluss auf die Beschaffenheit des in dem Behälter vorhandenen Produkts zu erhalten.

Die Vorrichtung zur Rotationsüberwachung ist jedoch nicht auf die Anwendung in einer Inspektionsmaschine oder einem Inspektionskarussell beschränkt, da eine Rotationsüberwachung in einer Vielzahl von technischen Anwendungen notwendig ist. Beispielsweise ist sie auch dann sinnvoll ist, wenn Stoffe durchmischt werden sollen.

In den Anwendungsgebieten der Rotationsüberwachung ist es wünschenswert, eine Verifikation durchzuführen, dass der Prüfling bzw. der Behälter tatsächlich mit einer gewünschten vorgegebenen Drehzahl rotiert wird.

So ist beispielsweise denkbar, dass der Servoantrieb sich in einem Normalzustand befindet, der zugehörige Behälter sich aufgrund eines Defekts dennoch nicht dreht. Typischerweise wird der Behälter auf eine Rotationsplatte (die auch Teller genannt wird) gestellt, die über ein Getriebe mit einem Servoantrieb in Verbindung steht. Bei einem Getriebedefekt, beispielsweise einem Achsbruch, findet keine Kraftübertragung vom Servoantrieb auf die Rotationsplatte bzw. den Behälter statt, obwohl der Servoantrieb an sich regulär arbeitet.

Darüber hinaus tritt oftmals zwischen der Rotationsplatte und dem darauf platzierten Prüfling ein Schlupf auf, der dazu führt, dass sich der Prüfling gar nicht oder nicht mit der gewünschten Drehzahl dreht. Dies kann bei einem Verfahren, das eine gewisse Rotation des Prüflings erfordert, zu Fehlern führen.

Bei einem Inspektionsverfahren ist eine ausreichend hohe oder genau bestimmbare Drehzahl des Prüflings oftmals Grundlage für ein verlässliches Inspektionsergebnis, das nicht unter irregulären Bedingungen (verminderte Drehzahl) erzielt werden kann.

Typischerweise wird der auf der Rotationsplatte angeordnete Prüfling von einem der Rotationsplatte gegenüberliegenden Andruckteil gegen die Rotationsplatte gedrückt, um den Prüfling bzw. den Behälter zwischen Andruckteil und Rotationsplatte zu klemmen. Dennoch treten die oben näher beschriebenen ungewollten Effekte auf.

Aus der JP 2009 156697 A ist eine gattungsgemäße Vorrichtung zur Rotationsüberwachung mit den Merkmalen des Oberbegriffs des Anspruchs 1 bekannt. Aus der DE 10 2013 206989 A1 ist es bekannt, die Rotation eines Prüflings über eine Differenzwinkelmessung an zwei voneinander beabstandeten Sensoren zu erfassen. Aus der JP H05 69611 U, der DE 10 2009 014663 und der DE 602 03 769 T2 sind weitere Rotationsüberwachungsvorrichtungen bekannt.

Aufgabe der vorliegenden Erfindung ist es daher, eine Vorrichtung zur Rotationsüberwachung zu schaffen, die kosteneffizient umsetzbar und zuverlässig ist.

Diese Aufgabe wird durch die Vorrichtung zur Rotationsüberwachung mit den Merkmalen nach Anspruch 1 gelöst.

Nach dem Gegenstand des Anspruchs 1 ist ein Prüfling zwischen einer Rotationsplatte und einem drehbar gelagerten Andruckteil so geklemmt, dass bei einem Rotieren der Rotationsplatte der Prüfling sich um seine eigene Achse dreht. Ferner umfasst die Vorrichtung eine Einheit zum Feststellen der Solldrehzahl der Rotationsplatte, eine Erfassungseinheit zum Bestimmen der Drehzahl des Andruckteils und/oder der Rotationsplatte, und eine Vergleichereinheitzum Vergleichen der Drehzahl des Andruckteils und/oder der Rotationsplatte mit der Solldrehzahl der Rotationsplatte. Die Vergleichereinheit ist mit der Erfassungseinheit verbunden und dazu ausgelegt, ab einer gewissen Differenz zwischen der Solldrehzahl der Rotationsplatte und der Drehzahl des Andruckteilsund/oder der Rotationsplatte ein Fehlersignal auszugeben.

Die Einheit zum Feststellen der Drehzahl der Rotationsplatte ist meist dadurch realisiert, indem mit Hilfe der Drehzahl des die Rotationsplatte antreibenden Servoantriebs und dem zwischen dem Servoantrieb und der Rotationsplatte bekannten Übersetzungsverhältnis auf die Solldrehzahl der Rotationsplatte geschlossen wird, welche an die Einheit zum Feststellen der Drehzahl gegeben wird. Es ist jedoch auch eine beliebige andere Einheit zum Feststellen der Solldrehzahl der Rotationsplatte für die Zwecke der Erfindung möglich.

Die Erfindung weist darüber hinaus zusätzlich eine Erfassungseinheit zum Bestimmen der Drehzahl des Andruckteils auf. Das Andruckteil ist rotierbar gelagert, sodass bei einem Drehen des Prüflings das Andruckteil in eine entsprechende Drehung versetzt wird. Das Andruckteil ist vorzugsweise mit einer zum Prüfling gerichteten plattenartigen Fläche versehen, mit der der Prüfling oder ein Verschluss des Prüflings in Kontakt steht. Darüber hinaus kann an den Rändern des Andruckteils eine Leiste vorhanden sein, die ein Abrutschen des Prüflings vom dem Andruckteil verhindert.

Die Vergleichereinheit vergleicht die Drehzahl des Andruckteils und/oder der Rotationsplatte mit der Solldrehzahl der Rotationsplatte und gibt bei einer gewissen Differenz ein Signal aus, das auf die Diskrepanz hinweist. Durch die angetriebene Rotationsplatte, auf der der Prüfling platziert ist, und der mit dem Prüfling in Kontakt stehenden Andruckplatte lässt sich mit Hilfe der Andruckplatte die Drehzahl ermitteln, mit der sich der Prüfling mindestens dreht. Das System gilt als in Ordnung, wenn die Differenz zur Solldrehzahl kleiner als ein entsprechend vorgegebener Schwellenwert ist.

Die Vorrichtungumfasst ferner einen magnetischen Polring, der rotationsfest an dem Andruckteil und/oder der Rotationsplatte angeordnet ist. Der Polring ist lateral mehrpolig außen magnetisiert. Die Erfassungseinheit zum Bestimmen der Drehzahl des Andruckteils und/oder der Rotationsplatte ist als ein magnetoresistiver Sensor ausgeführt, der zum Erfassen der Magnetfelder des magnetischen Polrings ausgebildet ist.

Durch Verwenden des magnetischen Polrings ist die Anfälligkeit des Systems gegen eine Verschmutzung der Vorrichtung besonders gering, so dass die Zuverlässigkeit des Systems sehr ausgeprägt ist. Dadurch ist es möglich, eine besonders kosteneffiziente Vorrichtung zur Rotationsüberwachung zu schaffen, die auch in eine bestehende Inspektionsmaschine nachrüstbar ist. Der magnetische Polring wird vorzugsweise so angeordnet, dass sein Mittelpunkt der Rotationsachse des Andruckteils, des Prüflings und/oder der Rotationsplatte entspricht.

Anstelle des magnetoresistiven Sensors können auch ein induktiver oder Hall-Sensor zum Einsatz kommen.

Erfindungsgemäß werden zwei der oben genannten Sensoren nebeneinander angeordnet, um eine besonders zuverlässige Bestimmung der Drehzahl des Andruckteils bzw. der Rotationsplatte zu ermöglichen. Es ist von Vorteil, wenn sich die zwei Sensoren in der Ebene befinden, in der der Polring bzw. das Zahnrad liegt. So kann die Rotationsüberwachung über einen größeren Bereich durchgeführt werden. Die Signale der beiden Sensoren werden durch die Vergleichereinheit zusammen ausgewertet.

Vorzugsweise besteht der Polring aus einem Elastomer. Ein so ausgeführter Polring ist gegenüber einem normalerweise verwendeten Ferritmagnetring leichter, schlagunempfindlicher und einfacher zu fixieren.

Nach einer weiteren Variation der Erfindung ist die Erfassungseinheit zum Bestimmen der Drehzahl des Andruckteils und/oder der Rotationsplatte ortsfest angeordnet. Die Rotationsplatte, der Prüfling und das Andruckteil weisen gegenüber der Erfassungseinheit eine translatorische Bewegung auf.

Durch diese Anordnung ist es möglich eine kontinuierliche Reihe von Prüflingen an der Vorrichtung zur Rotationsüberwachung vorbeizuführen. So kann ohne Variation der Fördergeschwindigkeit jeder der mehreren Prüflinge einer Rotationsüberwachung unterzogen werden.

Darüber hinaus ist die Rotationsplatte mit einer Antriebseinheit gekoppelt, die dazu ausgelegt ist, die Rotationsplatte in Rotation zu versetzen. Dabei kann zwischen der Antriebseinheit und der Rotationsplatte ein Getriebe zwischengeschaltet sein, das die Ursprungsdrehzahl der Antriebseinheit wandelt.

Ferner betrifft die vorliegende Erfindung eine Inspektionsmaschine, die eine Vorrichtung zur Rotationsüberwachung nach einer der vorstehend ausgeführten Ausführungen umfasst.

Mit Hilfe der erfindungsgemäßen Vorrichtung bzw. der erfindungsgemäßen Inspektionsmaschine ist es möglich, einen Getriebeschaden des zwischen Antriebsmotor und Rotationsplatte angeordneten Getriebes, einen Achsbruch einer zwischen Servomotor und Rotationsplatte vorgesehenen Achse, einen Schlupf, der zwischen Rotationsplatte und dem Prüfling bei einem Beschleunigen oder einem Rotieren der Rotationsplatte auftritt, und/oder ein festgefressenes Lager in dem Andruckteil zu erkennen.

Bestimmt die Erfassungseinheit nur die Drehzahl an der Rotationsplatte, kann ein Getriebeschaden oder ein Achsbruch der zwischen Servomotor und Rotationsplatte vorgesehenen Achse erkannt werden, was jedoch in einigen Fällen ebenfalls von Vorteil ist.

Mit der erfindungsgemäßen Vorrichtung ist eine berührungslose Messung möglich. Dies hat den Vorteil, dass keine berührungsbehafteten und damit verschleißenden Teile, wie beispielsweise Schleifringe, zur Übertragung der Messdaten notwendig sind.

Die vorliegende Erfindung wurde vorstehend anhand deiner Inspektionsmaschine erläutert. Das erfindungsgemäße Konzept ist aber keinesfalls auf eine derartige Inspektionsmaschine beschränkt. Vielmehr kann diese erfindungsgemäße Rotationsüberwachung auf beliebigen Maschinen eingesetzt werden, in welchen beliebige Prüflinge in Rotation versetzt werden, wobei der Begriff des Prüflings ganz allgemein zu verstehen ist. Es kann sich bei den Prüflingen beispielsweise um Mischbehälter handeln, die zum Durchmischen eines Mischgutes dienen oder auch um Ampullen, in denen ein Feststoff durch Rotation der Ampullen aufgewirbelt werden soll.

Nachfolgend werden weitere Einzelheiten, Merkmale und Vorteile der Erfindung anhand von in den Figuren dargestellten Ausführungsbeispielen erklärt. Es zeigen:
- Fig. 1:: einen schematischen Aufbau der erfindungsgemäßen Vorrichtung,
- Fig. 2:: eine Ausführungsform der erfindungsgemäßen Vorrichtung mit einem magnetoresistiven Sensor, und
- Fig. 3:: eine weitere Ansicht der erfindungsgemäßen Vorrichtung mit einem magnetoresistiven Sensor, bei dem die nachgelagerte Signalverarbeitung ausführlicher dargestellt ist.

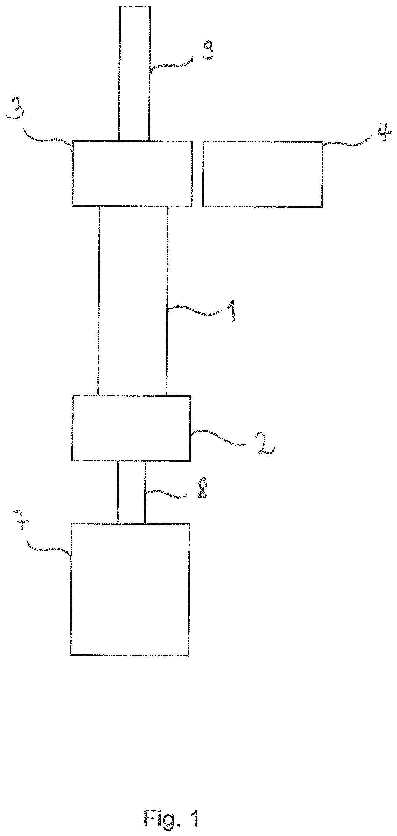

Fig. 1 zeigt einen Prüfling 1, der zwischen einer Rotationsplatte 2 und einem am anderen Ende des Prüflings 1 angeordneten Andruckteil 3 geklemmt ist. Auf der vom Prüfling 1 abgewandten Seite der Rotationsplatte 2 ist eine Ausgabewelle 8 eines Antriebsmotors 7 zu erkennen. Über die Ausgabewelle 8 des Antriebsmotors 7 wird die Rotationsplatte 2 in Drehung versetzt, wobei die Drehgeschwindigkeit vorteilhaft regelbar ist.. Durch die Klemmwirkung zwischen Rotationsplatte 2 und Prüfling 1 wird der Prüfling 1 ebenfalls in eine entsprechende Drehung versetzt, und führt zu einem Drehen des rotierbar gelagerten Andruckteils 3. Auf der vom Prüfling 1 abgewandten Seite des Andruckteils 3 erkennt man eine Welle 9, die rotierbar gelagert ist. Mit dem Bezugszeichen 4 ist die Erfassungseinheit zum Bestimmen der Drehzahl des Andruckteils bezeichnet.

Nicht dargestellt ist die Vergleichereinheit zum Vergleichen der Drehzahl oder der Solldrehzahl des Andruckteils 3 und der Drehzahl der Rotationsplatte 2. Je nach Anwendungsgebiet wird bei einem Überschreiten einer gewissen Differenz der beiden Drehzahlen zueinander ein Signal ausgegeben, das auf diesen Umstand hinweist. Dadurch ist es möglich zu erkennen, dass eine Inspektion des Prüflings 1 vermutlich unter irregulären Bedingungen erfolgt ist.

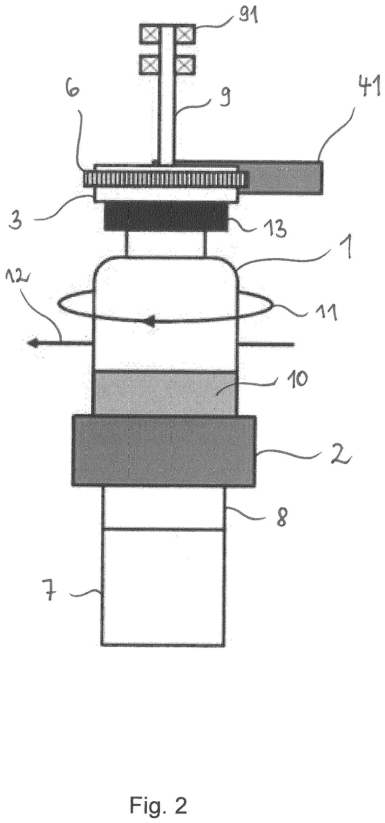

Fig. 2 zeigt eine Ausführungsform der Erfindung, in der die Erfassungseinheit zum Bestimmen der Drehzahl des Andruckteils 3 ein magnetoresistiver Sensor 41 ist, der im Zusammenspiel mit einem magnetischen Polring 6, der rotationsfest an dem Andruckteil 3 angeordnet ist, ein Signal zur Ermittlung der Drehzahl des Andruckteils 3 liefert. Darüber hinaus erkennt man eine Welle 9, die rotierbar an Lagerelementen 91 gelagert ist. Das Andruckteil 3 und die Rotationsplatte rotieren beide um eine gemeinsame Rotationsachse. Der Prüfling 1 ist in Figur 2 ein Behälter, der ein Material 10 umgibt. Der Behälter 1 weist ferner einen Verschluss 13 auf, der in einem direkten Kontakt mit dem Andruckteil 3 steht. An dem zu dem Andruckteil 3 abgewandten Ende des Prüflings 1 erkennt man die Rotationsplatte 2, und das mit dem Antriebsmotor 7 in Verbindung stehende Getriebe 8. Die Rotationsrichtung des Prüflings 1 ist beispielhaft mit dem Pfeil 11 angedeutet. Zudem ist die zum ortsfesten Sensor 41 vorhandene translatorische Bewegung des Behälters 1 mit Hilfe des Pfeils 12 kenntlich gemacht. Dem Fachmann ist klar, dass die vorliegende Erfindung selbstverständlich auch bei einer anderen Orientierung von Rotations- bzw. Bewegungsrichtung durchgeführt werden kann.

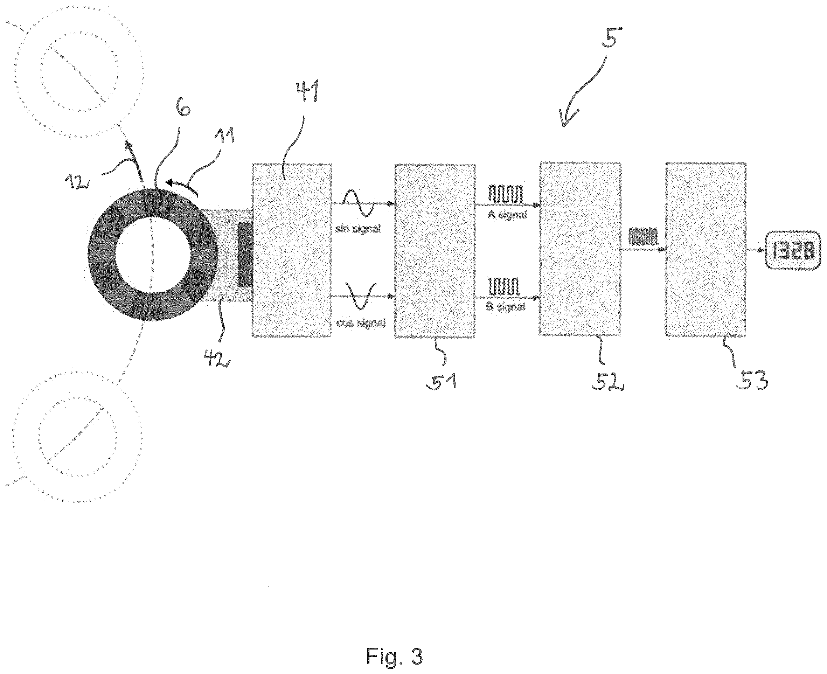

Fig. 3 zeigt eine etwas abstraktere Darstellung der vorliegenden Erfindung. Der Einfachheit halber wird nur der magnetische Polring 6 dargestellt und auf die unter bzw. über ihm angeordneten Bauteile wie Prüfling 1, Rotationsplatte 2, Andruckteil 3, Antriebsmotor 7 und Getriebe 8 verzichtet.

Man erkennt die kreisförmige translatorische Bewegung 12, die unabhängig von einer Rotation des magnetischen Polrings 6 beispielsweise eine Fortbewegungsrichtung des Prüflings 1 im Förderweg einer Inspektionsmaschine darstellt. Zudem erkennt man einer dieser Bewegung 12 gleichgerichtete Rotationsbewegung 11 des Polrings 6, die mit Hilfe des magnetoresistiven Sensors 41 detektiert wird. In Fig. 3 sind zwei nebeneinander angeordnete magnetoresistive Sensoren vorgesehen, damit über eine längere Wegstrecke die Rotation des Prüflings erfasst werden kann.

Das erfasste Signal wird an die Vergleichereinheit 5 gegeben, die einen Konverter 51, einen Exklusiv-Oder-Baustein 52 und einen Zähler 53 umfasst.

Die Messung findet statt, wenn sich der Polring bzw. das Zahnrad in einer bestimmten räumlichen Beziehung zum Bereich 42 befindet.

## Patentansprüche

1. Vorrichtung zur Rotationsüberwachung, wobei ein Prüfling (1) zwischen einer Rotationsplatte (2) und einem drehbar gelagerten Andruckteil (3) so klemmt, dass bei einem Rotieren der Rotationsplatte (2) der Prüfling (1) sich um seine eigene Achse dreht, wobei die Vorrichtung umfasst:
eine Einheit zum Feststellen der Solldrehzahl der Rotationsplatte (2),
eine Erfassungseinheit (4) zum Bestimmen der Drehzahl des Andruckteils (3) und/oder der Rotationsplatte (2), und
eine Vergleichereinheit (5) zum Vergleichen der Drehzahl des Andruckteils (3) und/oder der Rotationsplatte (2) mit der Solldrehzahl der Rotationsplatte (2), wobei die Vergleichereinheit (5) mit der Erfassungseinheit (4) verbunden und dazu ausgelegt ist, ab einer gewissen Differenz zwischen der Solldrehzahl der Rotationsplatte (2) und der Drehzahl des Andruckteils (3) und/oder der Rotationsplatte (2) ein Fehlersignal auszugeben,
**dadurch gekennzeichnet,**
**dass** mindestens zwei ortsfeste Erfassungseinheiten (4) zum Bestimmen der Drehzahl des Andruckteils (3) und/oder der Rotationsplatte (2) vorgesehen sind, die nebeneinander so angeordnet sind, dass die Rotation des Andruckteils (3) und/oder der Rotationsplatte (2) entlang einer längeren Wegstrecke einer translatorischen Bewegung erfasst werden kann, und
**dass** ein magnetischer Polring (6) vorgesehen ist, der rotationsfest an dem Andruckteil (3) und/oder der Rotationsplatte (2) angeordnet ist, wobei die Erfassungseinheiten (4) zum Bestimmen der Drehzahl des Andruckteils (3) und/oder der Rotationsplatte (2) magnetoresistive Sensoren (41) zum Erfassen der magnetischen Felder des magnetischen Polrings (6) sind.

2. Vorrichtung nach Anspruch 1, wobei die Rotationsplatte (2) mit einer Antriebseinheit (7) gekoppelt ist, die dazu ausgelegt ist, die Rotationsplatte (2) in Rotation zu versetzen.

3. Inspektionsmaschine mit einer Vorrichtung zur Rotationsüberwachung nach einem der vorhergehenden Ansprüche.

## Claims

1. Rotary monitoring device, wherein a test specimen (1) is clamped between a rotary plate (2) and a rotationally-supported pressing part (3) in such a way that the test specimen (1) is rotated around its own axis when the rotary plate (2) is rotated, wherein the device comprises:
a unit for determining the target rotational speed of the rotary plate (2),
a detection unit (4) for determining the rotational speed of the pressing part (3) and/or of the rotary plate (2), and
a comparing unit (5) for comparing the rotational speed of the pressing part (3) and/or of the rotary plate (2), to the target rotational speed of the rotary plate (2), wherein the comparing unit (5) is connected to the detection unit (4) and configured to output an error signal if a certain difference between the target rotational speed of the rotary plate (2) and the rotational speed of the pressing part (3) and/or of the rotary plate (2) is exceeded,
**characterized in that**
at least two stationary detection units (4) are provided for determining the rotational speed of the pressing part (3) and/or of the rotary plate (2), which are arranged next to one another so that the rotation of the pressing part (3) and/or of the rotary plate (2) can be detected along a longer path of a translational movement, and
**in that** a magnetic pole ring (6) is provided, which is arranged on the pressing part (3) and/or the rotary plate (2) in a rotationally-fixed manner, wherein the detection units (4) for determining the rotational speed of the pressing part (3) and/or of the rotary plate (2) are magneto-resistive sensors (41) for detecting the magnetic fields of the magnetic pole ring (6).

2. Device according to claim 1, wherein the rotary plate (2) is coupled with a drive unit (7) which is configured to induce the rotary plate (2) to rotate.

3. Inspection machine, having a rotary monitoring device in accordance with any one of the preceding claims.

## Revendications

1. Dispositif de surveillance rotatif, dans lequel un objet de mesure (1) est serré entre une plaque rotative (2) et une partie de pression supportée par rotation (3) de telle sorte que l'objet de mesure (1) tourne autour de son propre axe lorsque la plaque de rotation (2) est entraînée en rotation, dans lequel le dispositif comprend :
une unité pour déterminer la vitesse de rotation cible de la plaque rotative (2) ;
une unité de détection (4) pour déterminer la vitesse de rotation de la partie de pression à contact (3) et/ou de la plaque rotative (2), et
une unité de comparaison (5) pour comparer la vitesse de rotation de la partie de pression à contact (3) et/ou de la plaque rotative (2) avec la vitesse de rotation cible de la plaque rotative (2),
dans lequel l'unité de comparaison (5) est connectée à l'unité de détection (4) et est configurée pour produire un signal d'erreur si une certaine différence entre la vitesse de rotation cible de la plaque rotative (2) et la vitesse de rotation de la partie de pression à contact (3) et/ou de la plaque rotative (2) est dépassée,
**caractérisé en ce que**
au moins deux unités de détection stationnaires (4) sont prévues, pour déterminer la vitesse de rotation de la partie de pression à contact (3) et/ou de la plaque rotative (2), lesquelles sont agencées l'une à côté de l'autre, de sorte que la rotation de la partie de pression à contact (3) et/ou de la plaque rotative (2) peut être détectée le long d'un trajet plus long d'un mouvement de translation, et
**en ce qu'**un anneau polaire magnétique (6) est prévu, lequel est agencé sur la partie de pression à contact (3) et/ou la plaque rotative (2) d'une manière solidaire en rotation, dans lequel les unités de détection (4) pour déterminer la vitesse de rotation de la partie de pression à contact (3) et/ou de la plaque rotative (2) sont des capteurs magnéto-résistifs (41) pour détecter les champs magnétiques de l'anneau polaire magnétique (6).

2. Dispositif de surveillance rotatif selon la revendication 1, dans lequel la plaque rotative (2) est couplée avec une unité d'entraînement (5), laquelle est configurée pour entraîner la plaque rotative (2) en rotation.

3. Machine d'inspection présentant un dispositif de surveillance rotatif selon l'une quelconque des revendications précédentes.
